# EUROPÄISCHE PATENTSCHRIFT

(11) **EP 1 529 197 B1**
(45) Veröffentlichungstag und Bekanntmachung des Hinweises auf die Patenterteilung: **16.11.2005**
(21) Anmeldenummer: 03792164.0
(22) Anmeldetag: 27.06.2003
(51) Int. Cl.: G01D 5/347, B23Q 17/22, G01B 3/00

(54) **LÄNGENMESSEINRICHTUNG**
LENGTH MEASURING DEVICE
DISPOSITIF DE MESURE DE LONGUEUR

(30) Priorität: 08.08.2002 DE 10236381
(43) Veröffentlichungstag der Anmeldung: 11.05.2005
(73) Patentinhaber: Dr. Johannes Heidenhain GmbH, 83292 Traunreut (DE)
(72) Erfinder: BÖGE, Ludwig, 07751 Jenapriessnitz (DE)
(86) Internationale Anmeldenummer: PCT/EP2003/006845
(87) Internationale Veröffentlichungsnummer: WO 2004/018973

(56) Entgegenhaltungen:
- DE-A- 2 249 936
- DE-A- 19 700 367
- DE-A- 19 914 311

## Beschreibung

Die Erfindung betrifft eine Längenmesseinrichtung gemäß dem Oberbegriff des unabhängigen Anspruchs 1 zur Messung der Relativlage eines ersten Maschinenteils gegenüber einem zweiten Maschinenteil. Das erste Maschinenteil ist beispielsweise das Bett einer Werkzeugmaschine und das zweite Maschinenteil der zum Bett verfahrbare Maschinenschlitten. Eine solche Einrichtung ist aus dem Dokument DE 2 249 936 A bekannt.

Zur genauen Positionsmessung an Werkzeug- oder Koordinatenmessmaschinen werden die Maßstäbe bzw. die Maßstabträger aufwendig parallel zur Messrichtung ausgerichtet befestigt, wobei die Messrichtung durch die Führung der Werkzeug- oder Messmaschine vorgegeben ist. Eine Maßnahme zur Ausrichtung ist beispielsweise in der DE 199 14 311 A1 und der DE 197 00 367 A1 beschrieben.

Diese Maßnahmen sind aber bei Längenmesseinrichtungen, bei denen der Maßstab in einem Gehäuse geschützt untergebracht ist nicht oder nur schwer anwendbar.

Aufgabe der Erfindung ist es daher, eine Längenmesseinrichtung anzugeben, bei der das Gehäuse mit dem darin angeordneten Maßstab einfach parallel zur Maschinenführung ausrichtbar ist.

Diese Aufgabe wird erfindungsgemäß durch eine Längenmesseinrichtung mit den Merkmalen des Anspruches 1 gelöst.

Vorteilhafte Ausführungen sind in den abhängigen Ansprüchen angegeben.

Die Erfindung wird anhand von Zeichnungen näher erläutert, dabei zeigt
- Figur 1: ein Ausführungsbeispiel einer Längenmesseinrichtung im Längsschnitt;
- Figur 2: einen Querschnitt II-II der Längenmesseinrichtung gemäß Figur 1;
- Figur 3: einen Querschnitt der Längenmesseinrichtung mit einer Durchlicht-Abtastung;
- Figur 4: einen Querschnitt der Längenmesseinrichtung mit einer abgewandelten Linearführung;
- Figur 5: eine Längenmesseinrichtung mit einem Schutzband als Abdeckung;
- Figur 6: eine Längenmesseinrichtung im Längsschnitt mit einer Abtasteinrichtung außerhalb des Gehäuses;
- Figur 7: einen Querschnitt VII-VII der Längenmesseinrichtung gemäß Figur 6;
- Figur 8: einen Querschnitt der Längenmesseinrichtung gemäß Figur 6 mit einem abgewandelten Gehäuse und
- Figur 9: eine Prinzipdarstellung mit einem biegeschlaffen Gehäuse.

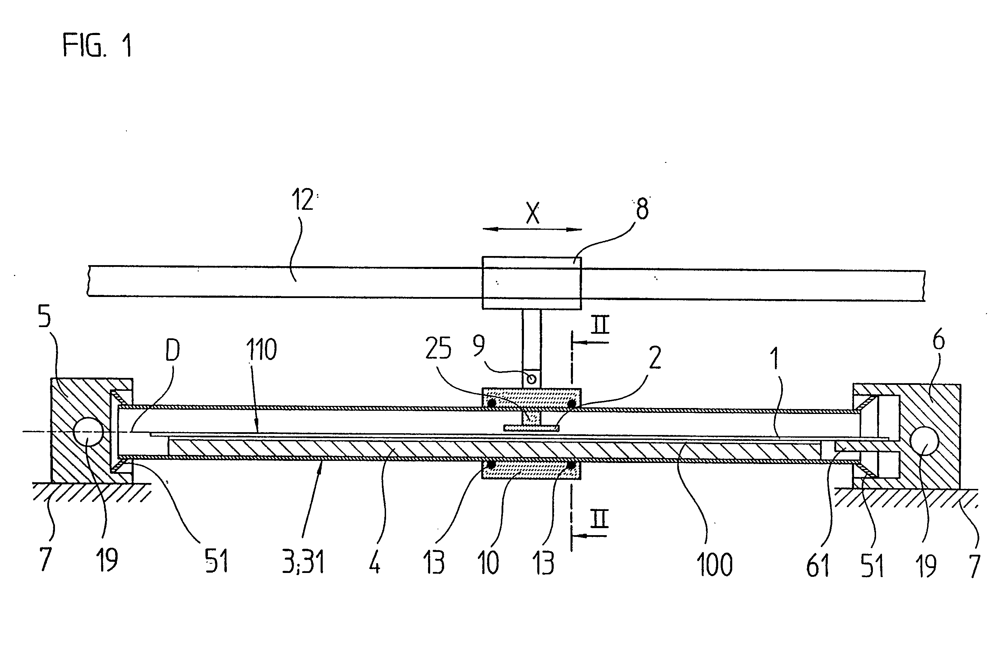

Anhand der Figuren 1 bis 5 werden gekapselte Längenmesseinrichtungen beschrieben, bei denen ein Maßstab 1 sowie eine Abtasteinrichtung 2 geschützt im Innenraum eines Gehäuses 3 angeordnet sind.

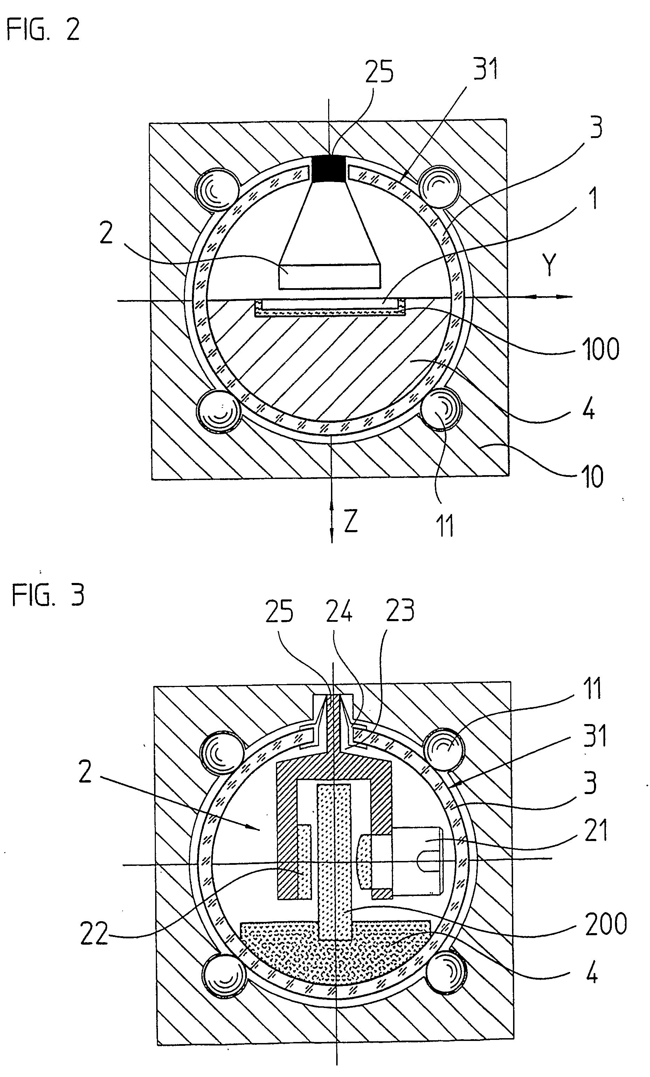

Die Längenmesseinrichtung gemäß den Figuren 1 und 2 besteht aus einem biegesteifen, eine kreiszylindrische Umfangsfläche aufweisenden Gehäuse 3, beispielsweise aus Aluminium, Kunststoff oder Stahl. An dem Gehäuse 3 ist über einen Träger 4 der Maßstab 1 befestigt.

Zur Positionsmessung ist das Gehäuse 3 über Montageelemente 5, 6 an einem ersten Maschinenteil 7 befestigt, dessen Position relativ zu einem zweiten Maschinenteil 8 gemessen werden soll. Die Ausbildung der Montageelemente 5, 6 wird später näher erläutert.

Zur Positionsmessung ist an dem zweiten Maschinenteil 8 über Befestigungsmittel 9 -insbesondere Schrauben- ein Führungsschlitten 10 befestigt, an dem wiederum die Abtasteinrichtung 2 zur Abtastung des Maßstabes 1 befestigt ist. Die Befestigung des Führungsschlittens 10 an dem zweiten Maschinenteil 8 erfolgt in Messrichtung X und in allen Richtungen Y, Z senkrecht zur Messrichtung X starr.

Der Führungsschlitten 10 umgreift das Gehäuse 3 allseitig und die Umfangsfläche des Gehäuses 3 bildet eine Führungsschiene 31, an der der Führungsschlitten 10 spielfrei in Messrichtung X geführt ist. Der Führungsschlitten 10 ist über eine Kugelbuchse 11 an dem Gehäuse 3 in allen Richtungen Y, Z senkrecht zur Messrichtung X spielfrei angekoppelt. Anstelle der Kugelbuchse 11 können auch andere Wälzführungen, oder auch Gleitführungen Verwendung finden.

An den beiden Enden des Führungsschlittens 10 sind Runddichtungen 13 zur Abdichtung zwischen dem Führungsschlitten und dem Gehäuse 3 angeordnet. Durch den Einsatz von umlaufenden Runddichtungen 13 ist eine gute Abdichtung gewährleistet.

Bei der Positionsmessung wird der Führungsschlitten 10 vom zweiten Maschinenteil 8 in Messrichtung X bewegt, wobei die Bewegungsbahn von der Maschinenführung 12, die in Figur 1 nur schematisch dargestellt ist, vorgegeben ist. Die in Messrichtung X und in allen Richtungen senkrecht dazu starre Ankopplung des Führungsschlittens 10 an dem zweiten Maschinenteil 12 sorgt dafür, dass eine fehlerfreie Übertragung' dieser Bewegung auf die am Führungsschlitten 10 starr angekoppelte Abtasteinrichtung 2 gewährleistet ist. Die darüber hinaus in allen Richtungen senkrecht zur Messrichtung X spielfreie Führung des Führungsschlittens 10 am Gehäuse 3 sorgt dafür, dass das Gehäuse 3 und somit der Maßstab 1 eine definierte Lage zur Maschinenführung 12 einnimmt. Das Gehäuse 3 muss somit nicht zwingend hochgenau parallel zur Maschinenführung 12 ausgerichtet angebaut sein. Bei einer Fehlausrichtung garantiert der Führungsschlitten 10 eine Mitnahme des Gehäuses 3 und somit eine korrekte Ausrichtung senkrecht zur Messrichtung X.

Um diese Ausrichtung im Messbetrieb zu gewährleisten, ist das biegesteife Gehäuse 3 mittels zumindest eines Montageelementes 5 am ersten Maschinenteil 7 befestigt, das Mittel 51 zur beweglichen Ankopplung des Gehäuses 3 in Richtungen Y, Z senkrecht zur Messrichtung X aufweist. Diese Mittel können elastische Elemente 51 zwischen dem starr an das erste Maschinenteil 7 anschraubbare Montageelement 5 und dem Gehäuse 3 sein, wobei diese elastischen Elemente 51 gleichzeitig eine Abdichtung zwischen dem Gehäuse 3 und dem Montageelement 5 bilden können.

Das Montageelement 6 gewährleistet eine in Messrichtung X starre Ankopplung des Gehäuses 3 an das erste Maschinenteil 7, lässt aber Querbewegungen in allen Richtungen Y, Z zu. Das Montageelement 5 lässt ebenfalls Querabweichungen des Gehäuses 3 in allen Richtungen Y, Z zu, lässt aber auch einen Längenausgleich des Gehäuses 3 relativ zum Montageelement 5 zu. Das Montageelement 6 zur in Messrichtung X starren und senkrecht dazu auslenkbaren Befestigung des Gehäuses 3 enthält einen Federdraht 61 oder einen Stab, der Gelenke in Form von Schwachstellen aufweist.

Der Maßstab 1 ist ein Stahlband, das über eine Ölschicht 100 oder eine andere viskose oder elastische Zwischenschicht an dem Träger 4 haftend befestigt ist, wie in der DE 196 11 983 beschrieben. Es kann aber auch ein Glasmaßstab eingesetzt werden. Zur Bildung eines Fixpunktes ist der Maßstab 1 an einer Stelle in Messrichtung X starr am Gehäuse 3 und/oder an dem Montageelement 6 befestigt.

Die Montageelemente 5, 6 werden über Bohrungen 19 starr an das erste Maschinenteil 7 angeschraubt. Eine hochgenaue Ausrichtung zur Maschinenführung 12 ist dabei nicht zwingend erforderlich.

Zur hochgenauen Positionsmessung trägt der Maßstab 1 eine lichtelektrisch abtastbare Messstruktur 110, die zur Bildung von positionsabhängigen Abtastsignalen von einer Lichtquelle und einer lichtempfindlichen Detektoreinheit abgetastet wird.

Anstelle der in den Figuren 1 und 2 dargestellten Auflicht-Abtastung mit einer reflektierenden Messstruktur 110 ist auch die Verwendung eines Maßstabs 200 möglich, der im Durchlicht-Abtastverfahren abtastbar ist, wie in Figur 3 dargestellt. Dabei ist der Maßstab 200 wiederum über einen Träger 4 oder unmittelbar am Gehäuse 3 befestigt und die Abtasteinrichtung 2 ist im Innenraum des Gehäuses 3 geschützt untergebracht. Die Abtasteinrichtung 2 weist auf einer Seite des Maßstabs 200 eine Lichtquelle 21 und auf der anderen Seite des Maßstabs 200 einen lichtempfindlichen Detektor 22 auf. Das Gehäuse 3 ist geschlitzt und dieser Schlitz 23 ist durch eine elastische Dichtung 24 abgedichtet, durch die ein schwertförmiger Mitnehmer 25 greift, der die Abtasteinrichtung 2 mit dem Führungsschlitten 10 in allen Richtungen X, Y, Z starr verbindet.

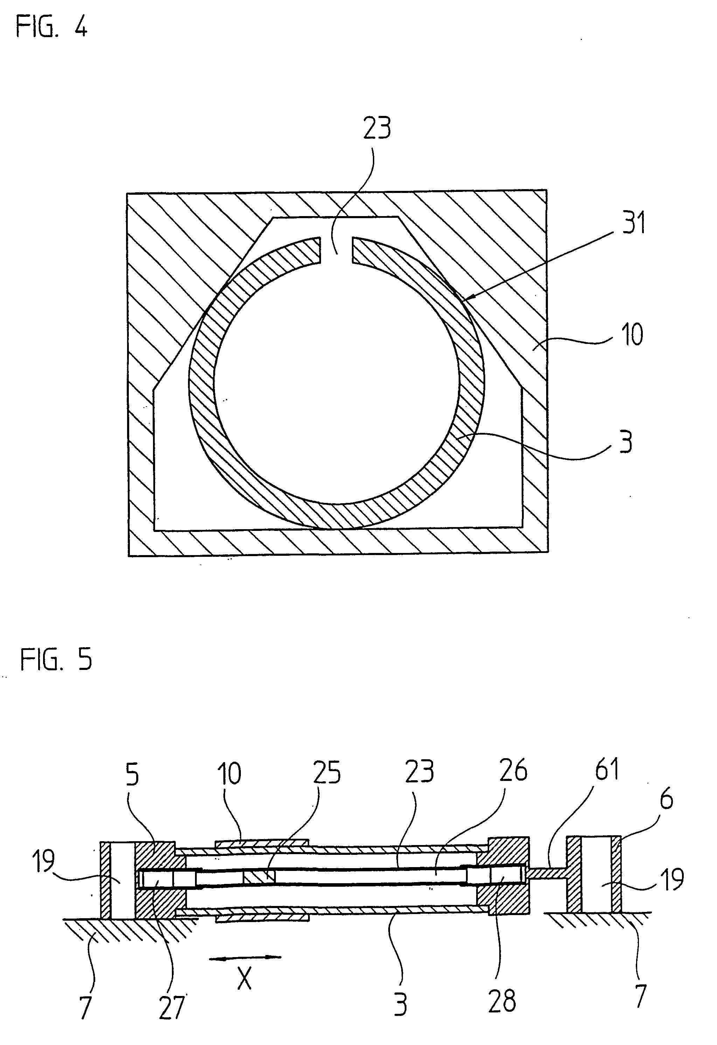

Die elastische Dichtung 24 kann durch ein Abdeckband 26 ersetzt werden. Dieses in Figur 5 dargestellte Abdeckband 26 ist im Schlitz 23 geführt, wobei es einerseits am Mitnehmer 25 befestigt ist und andererseits über Umlenkrollen 27, 28 am Gehäuse 3 gelagert ist, so dass es vom Mitnehmer 25 ausgehend über die erste Umlenkrolle 27 zur zweiten Umlenkrolle 28 zurück zum Mitnehmer 25 geführt ist und umläuft.

In Figur 4 ist eine abgewandelte Linearführung dargestellt. Die Führungsschiene wird wiederum von der Umfangsfläche 31 des Gehäuses 3 selbst gebildet, die Kugelbuchse ist hier aber durch eine Gleitführung ersetzt, wobei sich der Führungsschlitten 10 an mehreren Umfangsbereichen, insbesondere aber an drei um 120° gegeneinander versetzten Umfangsbereichen des Gehäuses 3 abstützt und spielfrei geführt wird.

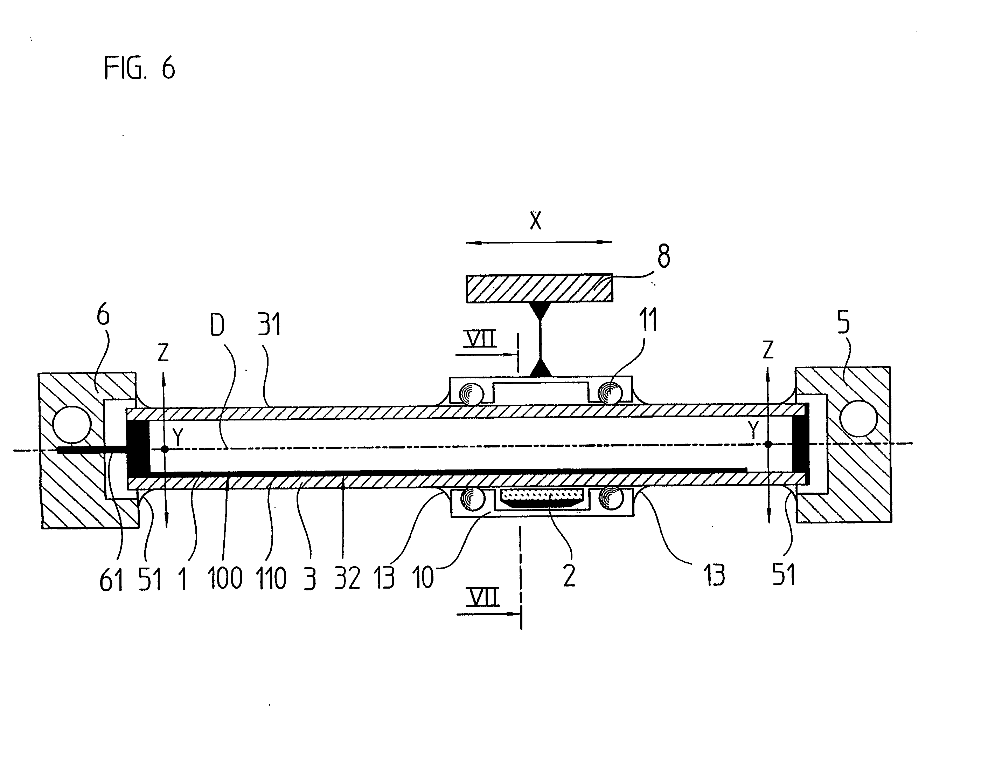

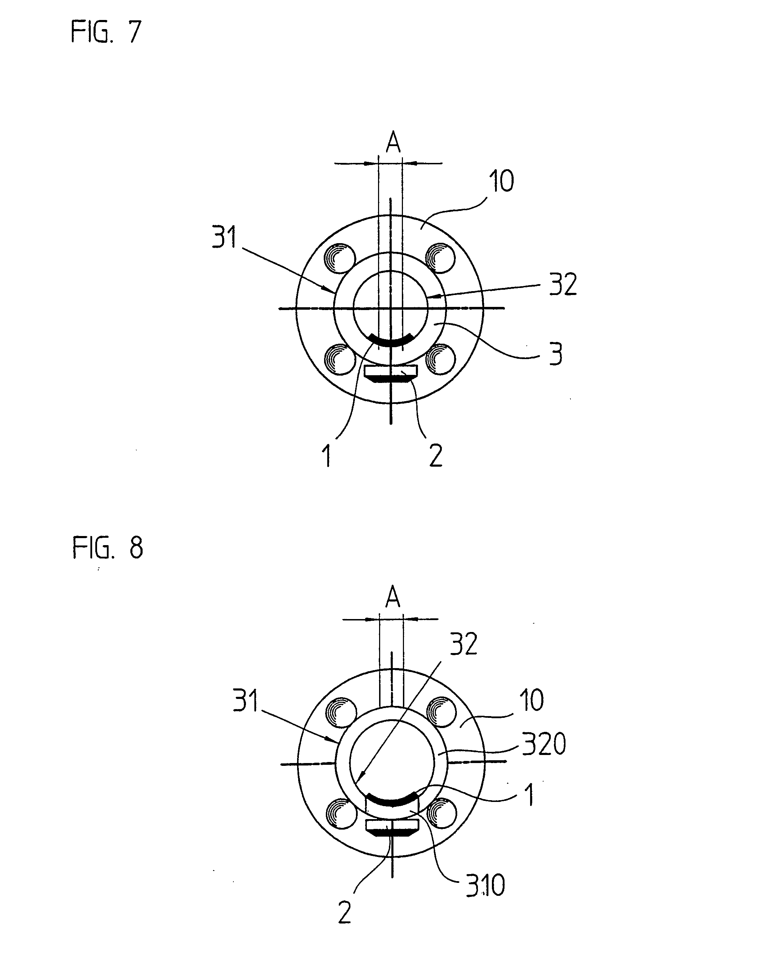

Figur 6 und 7 zeigen ein weiteres Ausführungsbeispiel einer Längenmesseinrichtung. Gegenüber den bisher erläuterten Beispielen befindet sich nun die Abtasteinrichtung 2 außerhalb des Gehäuses 3.

Das Gehäuse 2 ist rohrförmig und weist eine kreiszylindrischen Umfangsfläche 31 auf. Im Innenraum des Gehäuses 3 ist der lichtelektrisch abtastbare Maßstab 1 befestigt, der vorzugsweise ein längssteifes und gegebenenfalls an die Wölbung der Innenwand 32 angepasst vorgewölbtes Stahlband ist, welches über einen Ölfilm 100 direkt an der Innenwand 32 des Gehäuses 3 haftend befestigt ist. Die Messstruktur 110 des Maßstabs 1 wird von der Abtasteinrichtung 2 abgetastet, die über den Führungsschlitten 10 am zweiten Maschinenteil 8 in allen Richtungen X, Y, Z starr befestigt ist. Zur Abtastung durch das Gehäuse 3 ist dieses zumindest in dem Umfangsbereich A der Abtastung für das Abtastlichtbündel transparent. Das Gehäuse 3 kann also über den gesamten Umfang transparent ausgebildet sein, oder wie in Figur 8 dargestellt, nur partiell transparent sein, indem beispielsweise ein transparentes Segment 310 in ein Stahlsegment 320 eingesetzt ist.

Die Führung des Führungsschlittens 10 mit der Abtasteinrichtung 2 erfolgt am Außenumfang 31 des Gehäuses 3 oder an einer dem Gehäuse 3 starr zugeordneten separaten Führungsschiene in Richtungen Y, Z senkrecht zur Messrichtung X starr.

Der Führungsschlitten 10 ist in Messrichtung X und in allen Richtungen senkrecht zur Messrichtung X starr an dem zweiten Maschinenteil 8 befestigbar.

Das Gehäuse 3, beispielsweise ein Glasrohr- insbesondere aus zähelastischem Glas- oder ein Kunststoffrohr, ist biegesteif ausgebildet und ist über die Montageelemente 5, 6 am ersten Maschinenteil 7 befestigt. Beide Montageelemente 5, 6 haltern das Gehäuse 3 senkrecht zur Messrichtung X auslenkbar. Zur definierten Fixierung das Maßstabs 1 am ersten Maschinenteil 7 ist dieser an einem Montageelement 6 in Messrichtung X starr befestigt, wozu wieder ein Federdraht 61 oder ein Stab mit einem, aber insbesondere mit in Messrichtung X voneinander beabstandeten Gelenken in Form von Schwachstellen dient.

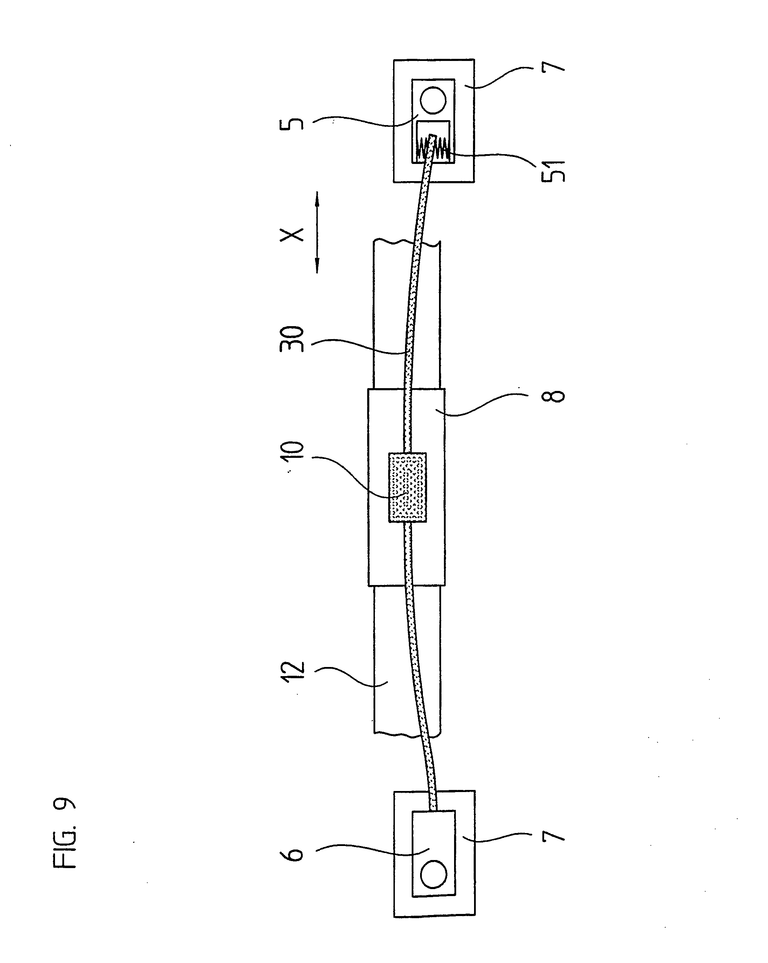

Um eine Fehlausrichtung zwischen der Maschinenführung 12 und dem Maßstab 1 im Messbetrieb auszugleichen, ist gemäß der Erfindung auch eine weitere Maßnahme vorteilhaft. Die Kupplungsmittel 51, 61 zwischen dem biegesteifen Gehäuse 3 und den Montageelementen 5, 6 werden dabei vom Gehäuse 30 selbst gebildet, indem dieses biegeschlaff ausgeführt ist. Diese Ausführung ist in Figur 9 im Prinzip dargestellt.

Die Führungsschiene wird wiederum von der Außenfläche 31 des Gehäuses 30 selbst gebildet. Alternativ kann eine eigene biegeschlaffe Führungsschiene dem Gehäuse 30 starr zugeordnet sein. Der Führungsschlitten 10 ist wiederum an der Führungsschiene 31 in Richtungen Y, Z senkrecht zur Messrichtung X spielfrei angekoppelt. Vorteilhafterweise hat das Gehäuse 30 eine kreiszylindrische Umfangsfläche 31, welche der Führungsschlitten 10 allseitig umgreift und die Umfangsfläche als Führungsfläche 31 dient. Der Führungsschlitten 10 ist an der Führungsschiene 31 in Richtungen Y, Z senkrecht zur Messrichtung X spielfrei angekoppelt. Die Abtasteinrichtung 2 ist starr am Führungsschlitten 10 und dieser wiederum in allen Richtungen X, Y, Z starr am zweiten Maschinenteil 8 befestigt. Durch das biegeschlaffe Gehäuse 20, das beispielsweise aus Kunststoff bestehen kann, ist sichergestellt, dass es im Messbetrieb zumindest im Führungsbereich und somit im Abtastbereich senkrecht zur Messrichtung X auslenkbar ist, so dass bei einer Bewegung des Führungsschlittens 10 senkrecht zur Messrichtung X das Gehäuse 30 in dieser Richtung mitgenommen wird. Eines der Gehäuseenden kann am ersten Maschinenteil 7 über ein Montageelement 6 starr und das andere Ende über ein weiteres Montageelement 5 längsbeweglich am ersten Maschinenteil 7 befestigt sein.

Die zu den Figuren 1 bis 8 erläuterten Maßstabanordnungen, Abtastprinzipien und Führungsausgestaltungen können auch bei dem Beispiel gemäß Figur 9 Verwendung finden.

Bei allen Beispielen ist möglich, dass der Führungsschlitten 10 um die Längsachse D des Gehäuses 3, 30 an der Führungsschiene 31 drehbar gelagert ist. Alternativ kann dieser rotatorische Freiheitsgrad geschaffen werden, indem das Gehäuse 3, 30 in den Montageelementen 5, 6 um diese Längsachse D drehbar gelagert ist.

## Patentansprüche

1. Längenmesseinrichtung zur Messung der Relativlage eines ersten Maschinenteils (7) gegenüber einem zweiten Maschinenteil (8) mit
- einem Gehäuse (3, 30), das am ersten Maschinenteil (7) befestigbar ist;
- einem Maßstab (1, 200) innerhalb des Gehäuses (3, 30), wobei der Maßstab (1, 200) entlang des Gehäuses (3, 30) in Messrichtung X verlaufend befestigt ist;
- einer Abtasteinrichtung (2) zur Abtastung des Maßstabs (1, 200); und
- einer Linearführung mit einer Führungsschiene (31), die dem Gehäuse (3, 30) starr zugeordnet ist und mit einem die Abtasteinrichtung (2) tragenden Führungsschlitten (10), welcher an der Führungsschiene (31) entlang des Gehäuses (3, 30) in Messrichtung X geführt ist, wobei
- der Führungsschlitten (10) Befestigungsmittel (9) aufweist, mit denen er in Messrichtung X und in allen Richtungen Y, Z senkrecht zur Messrichtung X starr an dem zweiten Maschinenteil (8) befestigbar ist, und
- der Führungsschlitten (10) an der Führungsschiene (31) in allen Richtungen Y, Z senkrecht zur Messrichtung X spielfrei angekoppelt ist;
**dadurch gekennzeichnet, dass**
- das Gehäuse (3, 30) derart ausgebildet und am ersten Maschinenteil (7) befestigbar ist, dass es im Messbetrieb zumindest im Führungsbereich senkrecht zur Messrichtung X auslenkbar ist, so dass bei einer Bewegung des Führungsschlittens (10) senkrecht zur Messrichtung X das Gehäuse (3, 30) in dieser Richtung mitgenommen wird.

2. Längenmesseinrichtung nach Anspruch 1, **dadurch gekennzeichnet, dass** die Führungsschiene von einer Außenfläche (31) des Gehäuses (3, 30) gebildet wird.

3. Längenmesseinrichtung nach Anspruch 2, **dadurch gekennzeichnet, dass** das Gehäuse (3, 30) rohrförmig ist und eine kreiszylindrische Umfangsfläche als Führungsfläche (31) der Führungsschiene aufweist, wobei der Führungsschlitten (10) an der Führungsfläche (31) mit einem Bewegungsfreiheitsgrad in Messrichtung X sowie mit einem rotatorischen Freiheitsgrad um die Längsachse D des Gehäuses (3, 30) spielfrei geführt ist.

4. Längenmesseinrichtung nach einem der vorhergehenden Ansprüche, **dadurch gekennzeichnet, dass** die Abtasteinrichtung (2) mit dem Führungsschlitten (10) in Messrichtung X und in allen Richtungen Y, Z senkrecht dazu starr verbunden ist.

5. Längenmesseinrichtung nach einem der vorhergehenden Ansprüche, **dadurch gekennzeichnet, dass** der Maßstab (1, 200) eine lichtelektrisch abtastbare Messstruktur (110) und die Abtasteinrichtung (2) zumindest eine Lichtquelle (21) und einen lichtempfindlichen Detektor (22) aufweist.

6. Längenmesseinrichtung nach einem der vorhergehenden Ansprüche, **dadurch gekennzeichnet, dass** der Maßstab (1, 200) innerhalb des Gehäuses (3, 30) angeordnet ist und die Abtasteinrichtung (2) zumindest eine Lichtquelle (21) und einen lichtempfindlichen Detektor (22) außerhalb des Gehäuses (3, 30) zur Abtastung des Maßstabs (1) mittels eines Lichtbündels durch das Gehäuse (3, 30) aufweist, wozu das Gehäuse (3, 30) zumindest in dem Umfangsbereich (A) der Abtastung für das Abtastlichtbündel transparent ist.

7. Längenmesseinrichtung nach einem der vorhergehenden Ansprüche, **dadurch gekennzeichnet, dass** der Maßstab (1) an einer Innenwand (32) entlang des Gehäuses (3) befestigt ist.

8. Längenmesseinrichtung nach Anspruch 7, **dadurch gekennzeichnet, dass** der Maßstab ein längssteifes und biegeschlaffes Stahlband (1) ist.

9. Längenmesseinrichtung nach einem der vorhergehenden Ansprüche, **dadurch gekennzeichnet, dass** das Gehäuse (3) längssteif und biegesteif ist.

10. Längenmesseinrichtung nach Anspruch 9, **dadurch gekennzeichnet, dass** das Gehäuse (3) zumindest ein Montageelement (5, 6) mit einem Kupplungselement (51, 61) aufweist, mit dem es senkrecht zur Messrichtung X auslenkbar am ersten Maschinenteil (7) befestigbar ist.

11. Längenmesseinrichtung nach Anspruch 10, **dadurch gekennzeichnet, dass** das Kupplungselement (51) an einem Ende des Gehäuses (3) das Gehäuse (3) längsbeweglich mit dem Montageelement (5) koppelt und das Kupplungselement (61) am anderen Ende des Gehäuses (3) das Gehäuse (3) in Messrichtung X steif mit dem Montageelement (6) koppelt.

12. Längenmesseinrichtung nach einem der vorhergehenden Ansprüche 1 bis 8, **dadurch gekennzeichnet, dass** das Gehäuse (30) längssteif und biegeschlaff ist.

## Claims

1. Length measuring device for measuring the relative position of a first machine part (7) with respect to a second machine part (8), said device having
- a housing (3, 30), which can be fastened to the first machine part (7),
- a scale (1, 200) inside the housing (3, 30), the scale (1, 200) being fastened extending along the housing (3, 30) in the measuring direction X,
- a scanning device (2) for scanning the scale (1, 200), and
- a linear guide device with a guide rail (31), which is rigidly assigned to the housing (3, 30), and with a guide carriage (10) which supports the scanning device (2) and is guided on the guide rail (31) along the housing (3, 30) in the measuring direction X,
- the guide carriage (10) having fastening means (9) with which it can be fastened rigidly to the second machine part (8) in the measuring direction X and in all directions Y,Z perpendicular to the measuring direction X, and
- the guide carriage (10) is connected to the guide rail (31) free of play in all directions Y, Z perpendicular to the measuring direction X,
**characterised in that**
- the housing (3, 30) is designed in such a way and can be so fastened to the first machine part (7), that during measuring operations it can be deflected perpendicularly with respect to the measuring direction X at least in the guide region, such that during a movement of the guide carriage (10) perpendicularly with respect to the measuring direction X, the housing (3, 30) is taken along in this direction.

2. Length measuring device according to claim 1, **characterised in that** the guide rail is formed by an exterior face (31) of the housing (3, 30) .

3. Length measuring device according to claim 2, **characterised in that** the housing (3, 30) is tubular and has a circular-cylindrical circumferential surface as the guide surface (31) of the guide rail, the guide carriage (10) being guided on the guide surface (31) free of play and with a degree of freedom in the measuring direction X as well as with a rotary degree of freedom about the longitudinal axis D of the housing (3, 30).

4. Length measuring device according to one of the preceding claims, **characterised in that** the scanning device (2) is rigidly connected to the guide carriage (10) in the measuring direction X and in all directions Y, Z perpendicular thereto.

5. Length measuring device according to one of the preceding claims, **characterised in that** the scale (1, 200) has a measuring structure (110) which can be photo-electrically scanned and the scanning device (2) has at least one light source (21) and a light-sensitive detector (22).

6. Length measuring device according to one of the preceding claims, **characterised in that** the scale (1, 200) is arranged inside the housing (3, 30) and the scanning device (2) has at least one light source (21) and a light-sensitive detector (22) outside the housing (3, 30) for scanning the scale (1) by means of a light beam through the housing (3, 30), for which purpose the housing (3,30) is transparent to the scanning light beam at least in the circumferential scanning area (A).

7. Length measuring device according to one of the preceding claims, **characterised in that** the scale (1) is fastened to an interior wall (32) along the housing (3).

8. Length measuring device according to claim 7, **characterised in that** the scale is a linearly rigid steel tape (1) of low flexural strength.

9. Length measuring device according to one of the preceding claims, **characterised in that** the housing (3) is linearly rigid and has flexural strength.

10. Length measuring device according to claim 9, **characterised in that** the housing (3) has at least one mounting element (5, 6) with a connecting element (51, 61), by means of which it can fastened to the first machine part (7) so that it can be deflected perpendicularly with respect to the measuring direction X.

11. Length measuring device according to claim 10, **characterised in that** the connecting element (51) at one end of the housing (3) connects the housing (3), linearly moveable, to the mounting element (5) and the connecting element (61) at the other end of the housing (3) connects the housing (3) rigidly in the measuring direction X to the mounting element (6).

12. Length measuring device according to one of the preceding claims 1 to 8, **characterised in that** the housing (30) is linearly rigid and has low flexural strength.

## Revendications

1. Dispositif de mesure de longueur pour mesurer la position relative d'un premier élément de machine (7) par rapport à un deuxième élément de machine (8), comprenant
- un boîtier (3, 30) qui peut être fixé au premier élément de machine (7);
- une règle de mesure (1, 200) disposée à l'intérieur du boîtier (3, 30), ladite règle de mesure (1, 200) étant fixée de manière à s'étendre le long du boîtier (3, 30), dans la direction de mesure X;
- un dispositif de palpage (2) pour palper la règle de mesure (1, 200); et
- un système de guidage linéaire comportant un rail de guidage (31), associé de manière rigide au boîtier (3, 30), et un curseur de guidage (10) qui porte le dispositif de palpage (2) et est guidé sur le rail de guidage (31), le long du boîtier (3, 30), dans la direction de mesure X,
- le curseur de guidage (10) présentant des moyens de fixation (9), à l'aide desquels il peut être fixé rigidement au deuxième élément de machine (8), dans la direction de mesure X et dans toutes les directions Y, Z qui sont perpendiculaires à la direction X, et
- le curseur de guidage (10) étant accouplé au rail de guidage (31) sans présenter de jeu dans aucune des directions Y, Z perpendiculaires à la direction de mesure X, **caractérisé en ce que**
le boîtier (3, 30) est agencé de manière telle et peut être fixé au premier élément de machine (7) de manière telle que, en service de mesure, il puisse être dévié perpendiculairement à la direction de mesure X, au moins dans la zone de guidage, de sorte que lors d'un déplacement du curseur de guidage (10) perpendiculairement à la direction de mesure X, le boîtier (3, 30) soit entraîné dans cette direction.

2. Dispositif de mesure de longueur selon la revendication 1, **caractérisé en ce que** le rail de guidage est formé par une surface extérieure (31) du boîtier (3, 30).

3. Dispositif de mesure de longueur selon la revendication 2, **caractérisé en ce que** le boîtier (3, 30) a une forme tubulaire et présente une surface périphérique cylindrique circulaire en tant que surface de guidage (31) du rail de guidage, le curseur de guidage (10) étant guidé sans jeu sur la surface de guidage (31), avec un degré de liberté de mouvement dans la direction de mesure X et avec un degré de liberté en rotation autour de l'axe longitudinal D du boîtier (3, 30).

4. Dispositif de mesure de longueur selon une des revendications précédentes, **caractérisé en ce que** le dispositif de palpage (2) est lié de façon rigide au curseur de guidage (10), dans la direction de mesure X et dans toutes les directions Y, Z perpendiculaires à celle-ci.

5. Dispositif de mesure de longueur selon une des revendications précédentes, **caractérisé en ce que** la règle de mesure (1, 200) présente une structure de mesure (110) pouvant être explorée par des moyens optoélectroniques et le dispositif de palpage (2) présente au moins une source lumineuse (21) et un capteur (22) sensible à la lumière.

6. Dispositif de mesure de longueur selon une des revendications précédentes, **caractérisé en ce que** la règle de mesure (1, 200) est disposée à l'intérieur du boîtier (3, 30) et le dispositif de palpage (2) comprend au moins une source lumineuse (21) et un capteur (22) sensible à la lumière, prévus à l'extérieur du boîtier (3, 30) pour explorer la règle de mesure (1) à l'aide d'un faisceau lumineux traversant le boîtier (3, 30), le boîtier (3, 30) étant à cet effet transparent pour le faisceau lumineux de palpage, au moins dans la zone périphérique (A) de l'exploration.

7. Dispositif de mesure de longueur selon une des revendications précédentes, **caractérisé en ce que** la règle de mesure (1) est fixée à une paroi intérieure (32) le long du boîtier (3).

8. Dispositif de mesure de longueur selon la revendication 7, **caractérisé en ce que** la règle de mesure est un ruban d'acier (1) rigide dans la direction longitudinale et mou en flexion.

9. Dispositif de mesure de longueur selon une des revendications précédentes, **caractérisé en ce que** le boîtier (3) est rigide dans la direction longitudinale et rigide en flexion.

10. Dispositif de mesure de longueur selon la revendication 9, **caractérisé en ce que** le boîtier (3) comprend au moins un élément de montage (5, 6) avec un élément d'accouplement (51, 61) par lequel il peut être fixé au premier élément de machine (7), avec possibilité de déviation verticale par rapport à la direction de mesure X.

11. Dispositif de mesure de longueur selon la revendication 10, **caractérisé en ce que** l'élément d'accouplement (51) accouple le boîtier (3) par une extrémité avec l'élément de montage (5), avec mobilité dans la direction longitudinale, et l'élément d'accouplement (61) accouple le boîtier (3) par son autre extrémité avec l'élément de montage (6), de manière rigide dans la direction de mesure X.

12. Dispositif de mesure de longueur selon une des revendications précédentes 1 à 8, **caractérisé en ce que** le boîtier (30) est rigide dans la direction longitudinale et mou en flexion.
